Europäisches Patentamt

European Patent Office

Office européen des brevets

(19)

(11) Publication number: **0 027 846**
A1

(12) # EUROPEAN PATENT APPLICATION

(21) Application number: **80103183.2**

(22) Date of filing: **09.06.80**

(51) Int. Cl.³: **F 16 F 1/40, B 61 G 11/08**

(30) Priority: **21.06.79 IT 6832479**

(43) Date of publication of application: **06.05.81**
Bulletin **81/18**

(84) Designated Contracting States: **CH DE FR GB LI NL SE**

(71) Applicant: **RIV-SKF OFFICINE DI VILLAR PEROSA S.p.A,
Via Mazzini 53, I-10123 Torino (IT)**

(72) Inventor: **Maniscalco, Renato, Via Caraglio 75,
I-10141 Torino (IT)**

(74) Representative: **Bongiovanni, Guido et al, c/o Ingg.
Carlo e Mario Torta Via Viotti 9, I-10121 Torino (IT)**

(54) Spring comprising a plurality of deformable elements arranged to support axial compression loads.

(57)   A spring is described arranged to support an axial compression load, comprising a plurality of deformable elements (1) and a plurality of interposed separator elements (2), the said elements (1, 2) being arranged so as to form a stack of elements in which the deformable elements are apt to deform in the direction of the axis of the spring when the said load is applied thereon.

The main feature of this spring is that each said separator element (2) is delimited by a pair of opposed parallel plane surfaces, at least one of which has one or more projections (17) projecting axially therefrom and apt to engage corresponding cavities of the adjacent deformable element (1) in order to limit, in the zone surrounding the said cavity, in a direction orthogonal to the said axis, the deformation of the said deformable element (1) when the said load is applied and the said axial deformation is produced.

0027846

## SPRING COMPRISING A PLURALITY OF DEFORMABLE ELEMENTS ARRANGED TO SUPPORT AXIAL COMPRESSION LOADS

The present invention relates to a spring arranged to support axial compression loads, of the type which comprises a plurality of deformable elements and a plurality of separator elements, each of which is interposed between two contiguous deformable elements, so as to form a stack of elements in which the deformable elements are apt to deform in the direction of the axis of the spring when a compression load is applied to the spring itself.

Springs of this type are usually utilized in numerous devices intended to absorb impact strength, such as railway puffers, motor vehicle bumpers and the like.

In the known springs of this type, each separator element, normally made of metal, is provided with means apt to center the element itself relative to the support structure of the spring, and with means for centering the deformable elements relative to the other elements. The centering of the separator elements relative to the said structure normally is obtained by coupling an axial hole, formed in each separator element, with a corresponding bar rigidly connected to the said support structure; to center each deformable element relative to two contiguous separator elements, on each separator element (normally made of plate) there is formed by drawing an annular portion, which generates, on one face of the element itself, a continuous annular projection and on the other face a corresponding annular cavity; each deformable element is provided, on one of its faces, with a continuous annular projection and on the other face with a continuous annular cavity, which projection and cavity are arranged to engage, respectively, a cavity and a projection of two contiguous separator elements.

The springs of the type described hereinabove have some disadvantages.

First of all, the radial deformation of each deformable element when a rather high load acts on the spring, is not efficiently hindered; in fact, it is well known that each said element, when being subjected to axial loads, deforms not only axially, but also in the orthogonal directions; such transversal deformation tends to modify in a permanent manner the shape and original dimensions of each deformable element, because of the permanent creep deformations to which the element is subjected in use, resulting in a modification of the resilient characteristics of the spring.

In fact, the separator elements, though being provided with the said continuous annular drawing, are not apt to efficiently hinder the transversal deformation of the deformable elements interposed therebetween, both because this drawing may easily be damaged by the high tangential stresses applied thereon and because the corresponding portions of the deformable elements are not able to withstand the said tangential stresses.

It follows that these springs are easily damaged in use and their resilient characteristic tends to be altered with time.

An object of the present invention is to provide a spring of the type described hereinabove, which will not have the aforementioned drawbacks.

Another object of the present invention is to provide a spring of the aforementioned type, in which it will be possible to control, in the desired manner, the deformability of the deformable elements in the directions orthogonal to the axis of the spring.

According to the present invention a spring apt to support an axial compression load is provided, comprising a plurality of deformable elements and a plurality of separator elements each of which in interposed between two contiguous deformable elements, the said elements being arranged so as to form a stack of elements in which the deformable elements are apt to deform in the direction of the axis of the spring when the said load is applied thereon, characterized in that each said separator element is delimited by a pair of opposed parallel surfaces substantially plane and having no cavities thereon, at least one of which surfaces has one or more projections projecting axially therefrom and apt to engage corresponding cavities of the adjacent deformable element in order to limit, in the zone surrounding the said cavity, in a direction orthogonal to the said axis, the deformation of the said deformable element when the load is applied and the said axial deformation is produced.

A better understanding of the present invention may be had when reading the following description of some particular embodiments of the invention, with reference to the annexed drawings, in which:

FIGURE 1 is a longitudinal sectional view of a puffer suitable for being mounted on railway vehicles and utilizing a spring according to the present invention;

FIGURE 2 is a sectional view along the line II-II of Fig. 1; and

0027846

FIGURES from 3 to 7 are longitudinal sectional views of a portion of springs manufactured in accordance with the concept of the present invention and corresponding to various embodiments.

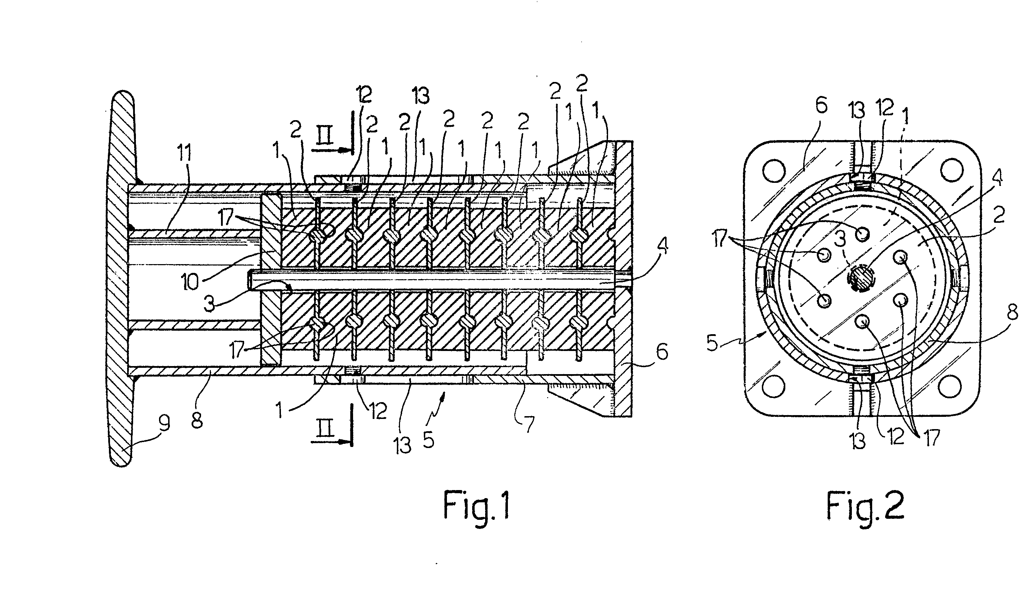

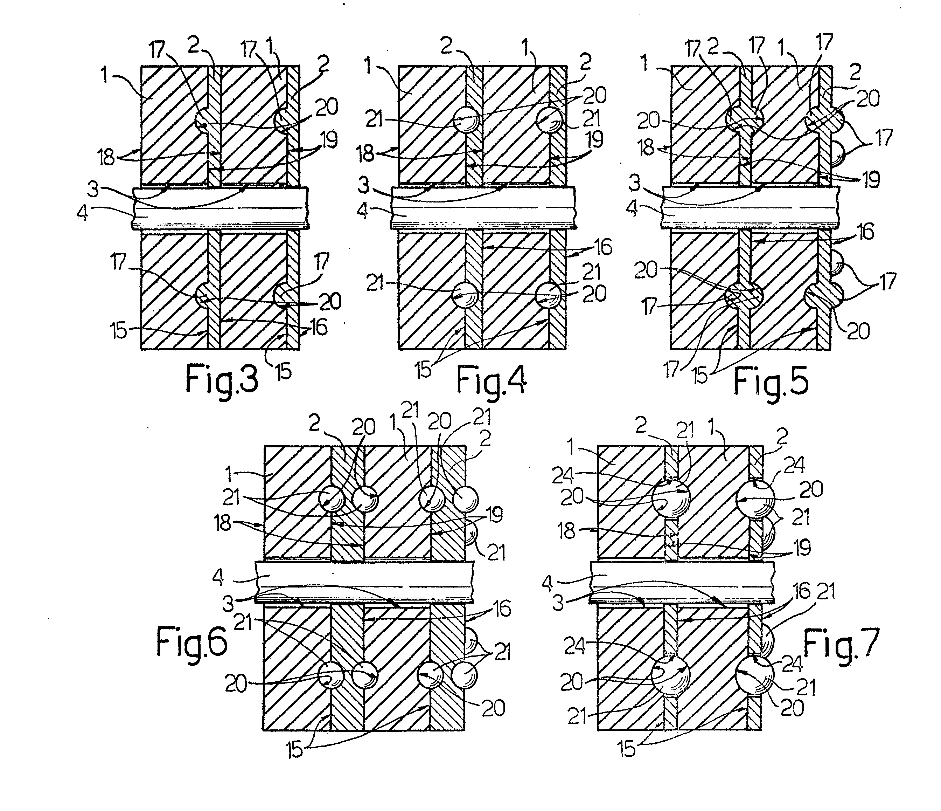

Referring first ' . to Fig. 1, the spring according to the present invention comprises substantially a plurality of deformable elements 1, normally made of rubber, having interposed therebetween separator elements 2, normally made of metal, the said elements being disposed in such a way as to substantially form a stack of elements in which the elements of the two types are alternate, as can be clearly seen in Fig. 1. The said elements may have any cross-section whatever, for example circular, elliptical or rectangular; conveniently, as can be seen in Fig. 1, the transverse dimensions of the elements 2 are slightly larger than those of the deformable elements 1. In the case of the embodiment shown, such elements are annular in shape and are provided with a central bore 3 which is apt to engage a bar 4 rigidly connected to a support stucture 5 of the device on which the spring has to be mounted, for example the box of a normal puffer for railway vehicles, as is shown in Figures 1 and 2.

Conveniently, the said box comprises a plate 6 arranged to be fixed to the vehicle and provided with a tubular element 7, inside which may slide a second tubular element 8 provided with an end plate 9 arranged to come into contact with a corresponding plate of another puffer.

The guide bar 4 is centered in a hole formed in plate 6 and in a movable disc 10 which may slide in the interior of the tubular element 8; resting on said disc is a sleeve 11 rigidly connected to the tubular element 8 and apt to transmit to this latter the axial load which is applied on the end plate 9.Conveniently, suitable means are provided
for limiting the axial movement, towards the right
in Fig. 1, of the second tubular element 8 relative to
the first tubular element 7, the said means being formed,
for example, by at least a pair of threaded pins 12 screwed
into holes of the second tubular element and slidable in
corresponding slits 13 of the first tubular element.

According to the present invention, each separator
element 2, as can be seen more clearly in the sectional
views shown in Figures from 3 to 7, has a pair of opposed
plane surfaces 15 and 16, having no cavities; projecting
from at least one of the said surfaces are projections 17
delimited, for example, by a spherical surface, as shown
in the embodiment represented in Fig. 3. In this case,
the said projections project from only one of the two
side surfaces of the separator element, namely the surface
indicated by reference numeral 15, whereas the other
surface, indicated by reference numeral 16, is completely
plane and without cavities. Each deformable element 1
interposed between two separator elements 2 has a plane
surface 18, having no cavities, which is apt to rest
against the corresponding surface 16 of the adjacent
separator element, and an opposed plane surface 19 having
cavities 20 formed therein which are apt to engage the
corresponding projections 17 of the separator element which
rests on the said surface; in the example shown, each
cavity 20 is delimited by a substantially spherical surface,
so as to provide a perfect coupling with the surface
of the respective projections 17, as clearly shown in Fig. 3.

Each projection 17, instead of being formed integral
with the separator element, as is the case of the example
shown in Fig. 3, may conveniently be formed by a body 21, separate from the separator element and housed in a suitable cavity of the said separator element; the shape of this body may be any shape whatever, and conveniently it is spherical, as shown in Fig. 4. In this case, formed on the surface 15 of each separator element are cavities delimited by spherical surfaces, each having a ball 21 inserted therein.

According to the present invention, each separator element 2 may be provided with projections 17 which project not from only one of its two side surfaces 15, 16, but from both of them, as in the embodiments shown in Figures 1 and from 5 to 7. In such case, the projections 17 of each pair of projections projecting from opposed surfaces may conveniently be aligned along the same straight line parallel to the axis of the spring, as in the embodiment shown in Fig. 5, or they may also be staggered with respect to one another. The projections 17 which project from both side surfaces 15, 16 of the separator elements 2 may be integral with the separator elements, as in the embodiment shown in Fig. 5, or they may be formed by bodies 21 housed in corresponding cavities of the separator element, as is the case of the embodiment shown in Fig. 6.

For forming a pair of projections 17 protruding from opposed sides relative to the separator element 2 it is possible to utilize a single body, as shown in Fig. 7; in this case, each separator element is provided with a through hole 24, inside which the said body is housed, for example a ball whose end portions protrude from opposed sides with respect to the element itself, so as to form the said projections.

The behaviour in use of the just described spring corresponding to one of the embodiments being considered, is as follows.

When an axial compression load trasmitted by the disc 10 acts on the spring, each deformable element is deformed in the direction of the axis of the spring, thus producing, as is well known, a corresponding deformation in a direction orthogonal to the direction of the said axis. Such deformation is substantially deleterious, since it reduces the load capacity of each deformable element, tends to permanently deform the element in a radial direction, and may also cause a breaking of the said element in case of considerably high axial loads. According to the present invention, the radial deformation of each deformable element is efficiently hindered, in a controlled manner, by the presence of the projections 17 coupled with the respective cavities 20. In fact, each of the said projections is able to hinder such radial deformation, and only this deformation, inside the projection itself; thus, it is clear that, by providing a suitable number of such projections and arranging them in a pre-established configuration, eventually obtained through experiments carried out on the spring, it is possible to obtain a structure in which the said radial deformations are completely avoided or, anyway, kept within such limits as to avoid the aforementioned disadvantages.

By a suitable arrangement of these projections, not only the said disadvantages are avoided, but it is also possible to obtain a desired characteristic of the spring, in particular a pre-established behaviour of the arrow of the spring as a function of the load, such as to satisfy desirable requirements from the point of view of the elasticity of the spring.

Contrarily to what happens with separator elemnts used in the prior art springs, the projections 17 are able to efficiently withstand radial stresses applied to them by the deformable elements 1, inasmuch as they obviously are capable of supporting high shearing stresses which would tend to separate them from the respective surfaces 15 and 16 from which they project; for this reason they are able to efficiently withstand such radial stresses.

It is clear that the embodiments of the present invention described hereinabove are susceptible of many modifications and variations, without departing from the scope of the invention. In particular, the projections 17 may have a configuration different from the configuration described and shown herein, no matter whether they are integral with the respective separator element 2 or formed by portions of bodies separate from the said element; it is also possible to utilize bodies of different configuration, for example cylindrical or conical, housed in corresponding cavities provided in the respective separator elements.

The arrangement of the projections on the side surfaces of the separator elements may be different, in order to obtain any pre-established configuration; in particular, it is also possible to utilize, on the same separator element, projections 17 having different shapes and/or dimensions, in order to obtain a desired limitation of the deformations of the deformable elements 1 in a radial direction.

C L A I M S

1.- A spring arranged to support an axial compression load, comprising a plurality of deformable elements and a plurality of separator elements, each of which is interposed between two adjacent deformable elements, the said elements being arranged so as to form a stack of elements in which the deformable elements are apt to deform in the direction of the axis of the spring when the said load is applied thereon, characterized in that each said separator element is delimited by a pair of opposed parallel surfaces substantially plane and having no cavities thereon, at least one of which surfaces has one or more projections projecting axially therefrom and apt to engage corresponding cavities of the adjacent deformable element in order to limit, in the zone surrounding the said cavity, in a direction orthogonal to the said axis, the deformation of the said deformable element when the said load is applied and the said axial deformation is produced.

2.- A spring as claimed in Claim 1, characterized in that the said projections are arranged on the separator elements according to a pre-established configuration, in order to limit, in a desired manner, the deformation of the deformable elements in the said direction orthogonal to the said axis.

3.- A spring as claimed in Claims 1 or 2, characterized in that the said projections are disposed in couples, one projection of each couple projecting from one of the said surfaces of a separator element, and the other projection of the same couple projecting from the other surface of the same element, the said two projections of each couple of projections being aligned substantially along the same straight line parallel to the said axis.

0027846

4.- A spring as claimed in any of the preceding Claims, characterized in that each of the said projections is formed by a body inserted into a corresponding cavity of the respective separator element.

5.- A spring as claimed in Claim 4, characterized in that each of the said projections is formed by a ball inserted into a corresponding spherical cavity of the respective separator element.

6.- A spring as claimed in any of the Claims from 1 to 3, characterized in that each pair of said projections is formed by a body inserted into a corresponding through hole of the respective separator element, the two end portions of each of the said bodies generating the two projections of the said pair of projections.

7.- A spring as claimed in Claim 6, characterized in that each of the said bodies is formed by a ball inserted into a corresponding hole of the respective separator element, two diametrally opposite spherical portions of the said ball forming the two projections of the said pair of projections.

8.- A spring apt to support an axial compression load, substantially as described herein with reference to the annexed drawings.

Fig.2

Fig.1

Fig.3

Fig.4

Fig.5

Fig.6

Fig.7

0027846

European Patent
Office

**EUROPEAN SEARCH REPORT**

0027846

Application number

EP 80 10 3183

## DOCUMENTS CONSIDERED TO BE RELEVANT

| Category | Citation of document with indication, where appropriate, of relevant passages | Relevant to claim |
|---|---|---|
| X | <u>US - A - 2 661 943</u> (WILBUR)<br>* Column 4, line 26 to column 5, line 11; column 5, lines 32-44; figures 3-5 * | 1-3 |
| | <u>FR - A - 786 122</u> (PIRELLI)<br>* Entire document * | 1,2 |
| | <u>US - A - 2 340 187</u> (HERSEY)<br>* Page 2, right-hand column, line 62 to page 4, right-hand column, line 2; figures 6-12 * | 1,2 |
| | <u>FR - A - 2 329 902</u> (UNILAN)<br>* Page 2, line 35 to page 4, line 25; figures 1-5 * | 1-3 |
| | <u>GB - A - 932 439</u> (LUXEMBOURGEOISE <u>DE BREVETS ET DE</u> PARTICIPATIONS)<br>* Page 2, lines 37-56; figure 3 * | 1-3 |
| | <u>US - A - 1 465 991</u> (MANBY)<br>* Figures 1-4 * | 4-7 |
| PE | <u>GB - A - 2 030 675</u> (MINER ENTER-PRISES)<br>* Page 3, lines 7-88; page 4, line 29 to page 5, line 37; figures 4-11 *<br>& FR - A - 2 437 290 | 1,2 |

**CLASSIFICATION OF THE APPLICATION (Int. Cl. 3)**

F 16 F   1/40
B 61 G 11/08

**TECHNICAL FIELDS SEARCHED (Int.Cl. 3)**

F 16 F
B 61 G
B 60 R
B 60 G

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search<br>The Hague | Date of completion of the search<br>24-09-1980 | Examiner<br>ESPEEL |
|---|---|---|

EPO Form 1503.1   06.78

| | European Patent Office | **EUROPEAN SEARCH REPORT** |
|---|---|---|

| **DOCUMENTS CONSIDERED TO BE RELEVANT** | | | CLASSIFICATION OF THE APPLICATION (Int. Cl. 3) |
|---|---|---|---|
| Category | Citation of document with indication, where appropriate, of relevant passages | Relevant to claim | |
| A | GB - A - 1 130 777 (GESELLSCHAFT FUR TECHNISCHEN FORTSCHRITT) | 1-3 | |
| A | GB - A - 641 316 (PIRELLI) | 1 | |
| A | GB - A - 612 701 (MOULTON) | 1 | |
| A | LU - A - 50 115 (LOWELL) | 1 | |
| A | US - A - 2 846 083 (MULCAHY) | 1 | |
| | ---- | | |

**TECHNICAL FIELDS SEARCHED (Int. Cl. 3)**

EPO Form 1503.2 06.78